# EUROPEAN PATENT SPECIFICATION

(11) **EP 3 299 841 B1**
(45) Date of publication and mention of the grant of the patent: **04.05.2022**
(21) Application number: 16465539.1
(22) Date of filing: 22.09.2016
(51) Int. Cl.: G01S 13/42, G01S 13/72, G01S 13/93, G01S 13/86, G01S 13/87

(54) **METHOD AND APPARATUS FOR ANALYZING REFLECTION SIGNALS, DRIVER ASSISTANCE SYSTEM, AND VEHICLE**
VERFAHREN UND VORRICHTUNG ZUR ANALYSE VON REFLEKTIONSSIGNALEN, FAHRERASSISTENZSYSTEM UND FAHRZEUG
PROCÉDÉ ET APPAREIL D'ANALYSE DE SIGNAUX DE RÉFLEXION, SYSTÈME D'ASSISTANCE AU CONDUCTEUR ET VÉHICULE

(43) Date of publication of application: 28.03.2018
(73) Proprietor: Continental Automotive GmbH, 30165 Hannover (DE)
(72) Inventor: Sasu, Robert, 525200 Covasna (RO)
(74) Representative: Continental Corporation

(56) References cited:
- DE-A1-102004 058 844
- DE-A1-102012 105 582
- US-A1- 2013 321 195
- US-A1- 2015 204 972

## Description

The invention relates to method for analyzing reflection signals, an apparatus for analyzing reflection signals, a driver assistance system for a vehicle, and a vehicle. The invention in particular relates to the analysis of reflection signals such as radar signals or infrared signals.

Modern driver assistance systems comprise a plurality of sensors which emit electromagnetic waves, such as radar sensors, infrared sensors or ultrasonic sensors. The reflected electromagnetic waves are received and analyzed in order to determine the distance or exact location of objects within the surrounding of the vehicle. From document US 2014/0368375 A1, an exemplary radar sensor is known which is used for a collision detection system in order to avoid collisions with objects in the surrounding of the vehicle. US 2013/321195 A1 discloses a radar apparatus which is adapted to derive information on the accurate position of a moving target.

DE 10 2004 058844 A1 discloses a radar apparatus which is adapted to derive information on the accurate position of a moving target.

US 2015/204972 A1 discloses a method for a radar sensor providing an angle estimation if reflections occur.

DE 10 2012 105582 A1 refers to angle estimation of objects with a radar system.

The electromagnetic waves will not always propagate on a direct path between the object and the sensor. Rather, the electromagnetic wave may be reflected by one or more mirroring surfaces along its path. If the origin of the reflection is guessed based on a time-of-flight analysis in this case, ghost objects are identified, i.e., virtual reflection points which do not correspond to actual physical objects. These false signals or ghost echoes have to be eliminated, because they do not correspond to actual physical entities.

In view of the above, it is therefore an object of the present invention to provide an analysis of reflection signals which allows eliminating false signals corresponding to ghost echoes.

In accordance with the invention, a method for analyzing reflection signals with the features as recited in claim 1 is disclosed. Further, an apparatus for analyzing reflection signals having the features of claim 10 is provided. The invention further provides a driver assistance system for a vehicle as recited in claim 14 and a vehicle as recited in claim 15.

Therefore, according to a first aspect, the invention provides a method for analyzing reflection signals, wherein time-dependent reflection signals are received by a sensor. Each reflection signal corresponds to a respective reflection point candidate. For first to third reflection signals corresponding to respective first to third reflection point candidates, time-dependent vectorial distances are determined by a processing unit, the time-dependent vectorial distances comprising a first distance which extends between the first and second reflection point candidates, a second distance which extends between the second and third reflection point candidates, a third distance which extends between the first and third reflection point candidates, and respective sensor distances which extend between the first or third reflection point candidate and the sensor. It is checked by the processing unit whether the time dependencies of the absolute value of the first distance and the absolute value of the second distance are equal, and if the time dependencies of the first distance and the second distance are mirror symmetric relative to a time dependent plane which is orthogonal to the third distance and extends through the second reflection point candidate. If those conditions hold, i.e., if the result of both checks is positive, the reflection signal out of the first reflection signal and the third reflection signal corresponding to the reflection point candidate having a larger sensor distance is classified as a false signal.

The invention further provides an apparatus for analyzing reflection signals, comprising a sensor which is adapted to receive time dependent reflection signals, wherein each reflection signal corresponds to a respective reflection point candidate. The apparatus further comprises a processing unit which is adapted to determine, for first to third reflection signals corresponding to respective first to third reflection point candidates, time-dependent vectorial distances, wherein a first distance extends between the first and second reflection point candidates, a second distance extends between the second and third reflection point candidates, a third distance extends between the first and third reflection point candidates, and respective sensor distances extend between the first or third reflection point candidate and the sensor. The processing unit is further adapted to check if the following conditions hold:
a) the time dependencies of the absolute value of the first distance and the absolute value of the second distance are equal, and
b) the time dependencies of the first distance and the second distance are mirror symmetric relative to a time dependent plane, which is orthogonal to the third distance and extends through the second reflection point candidate.

The processing unit is adapted to classify the reflection signal out of the first reflection signal and the third reflection signal corresponding to the reflection point candidate having a larger sensor distance as a false signal, if the conditions a) and b) hold.

According to another aspect of the invention, a driver assistance system for a vehicle is provided, which comprises an apparatus for analyzing reflection signals, and a control device which is adapted to control driving functions of the vehicle based on the reflection signals.

Driving functions may include active driving functions, like accelerating or decelerating the vehicle or controlling a steering angle of the vehicle. Driving functions of the vehicle may also include passive functions, like providing image data and displaying the image data on a vehicle display to a driver of the vehicle or controlling actuators of the vehicle based on the reflection signals.

According to a further aspect, the invention provides a vehicle comprising a driver assistance system.

A reflection point candidate in the sense of the present invention refers to a hypothetical or physical object or entity which is assumed to reflect a signal emitted by the sensor, wherein a path of the electromagnetic wave or signal emitted by the sensor is assumed to follow a straight path from the sensor to the reflection point candidate, is reflected at the reflection point candidate and returns to the sensor along the same path. In other words, reflection point candidates are identified under the assumption that no mirroring surfaces exist which could alter the path of the signals.

Preferably, the distances between two reflection point candidates are determined based on the sensor distances between a reflection point candidate and the sensor.

The invention provides a method which allows discriminating between reflection point candidates which correspond to physical objects, i.e., which actually reflect the signal back to the sensor on a straight path without any further reflections in between, and reflection point candidates which do not correspond to physical objects, but instead refer to ghost objects corresponding to echoes of real objects. Thus, the invention helps to avoid misidentifications of non-existing objects and increases the accuracy.

According to a further embodiment of the method, the reflection signals are received by a radar sensor or an infrared sensor.

According to a preferred embodiment of the method, reflection signals classified as false signals are excluded from further processing. For instance, the false signals may be deleted.

According to a further embodiment of the method, the time-dependent vectorial distances are determined for all pairs of reflection point candidates and between all reflection point candidates and the sensor. Accordingly, a precise spatial relationship between all reflection point candidates is known and the method can be repeated for different choices of reflection signals in order to identify all false reflection signals.

According to a further embodiment of the method, if conditions a) and b) hold, the second reflection point candidate is classified as a mirror point. A mirror point corresponds to a physical object which can reflect the emitted electromagnetic waves or signals. Possible mirror points can comprise guardrails, other vehicles, road signs or general metallic surfaces.

According to a further embodiment of the method, determining the time-dependent vectorial distances, checking conditions a) and b), and classifying the false signal is repeated for different first and/or third reflection signal, wherein the reflection signal corresponding to the mirror point remains the second reflection signal. Preferably, also reflection signals corresponding to reflection point candidates close to a mirror point, for example within a predetermined distance to a mirror point, can also be chosen as the second reflection signal with a higher priority because it is likely that the mirror point or regions around the mirror point have also reflected further reflection signals.

According to a further embodiment of the method, determining the time-dependent vectorial distances, checking conditions a) and b), and classifying the false signal is repeated for a different first and/or second and/or third reflection signals out of the set of reflection signals with those reflection signals already identified as false signals being removed. By ignoring false signals in the following evaluation steps, only reflection signals remain which could in principle correspond to real physical objects. The method is faster as compared to a complete evaluation of all reflection signals.

According to a further embodiment of the method, determining the time-dependent vectorial distances, checking conditions a) and b), and classifying the false signal is repeated for all possible combinations of first to third reflection signals out of the received reflection signals. In this way, all possible false signals can be identified and only reflection signals corresponding to mirror points or to actual physical objects remain.

According to a further embodiment of the method, if conditions a) and b) hold, the reflection signal out of the first reflection signal and the third reflection signal corresponding to the reflection point candidate having a smaller sensor distance is classified as a valid signal corresponding to a real reflection point or real physical object. Thus, the method allows determining and discriminating between valid signals, false signals and signals corresponding to mirror points.

According to a further embodiment of the apparatus, the sensor comprises a radar sensor or an infrared sensor.

According to another embodiment of the apparatus, the processing unit is adapted to generate a map of reflection points based on the reflection point candidates, wherein reflection point candidates corresponding to false signals are excluded.

According to another embodiment of the apparatus, the processing unit generates an image based on the map of reflection points.

For a more complete understanding of the invention and the advantages thereof, exemplary embodiments of the invention are explained in more detail in the following description with reference to the accompanying drawing figures, in which like reference characters designate like parts and in which:
- Fig. 1: shows a flowchart of a method for analyzing reflection signals according to an embodiment of the invention;
- Fig. 2: shows a schematic top view on an illustrative road scenario for illustrating the method according to the embodiment;
- Fig. 3: shows a schematic top view on a further illustrative road scenario for illustrating the method according to the embodiment;
- Fig. 4: shows a schematic block diagram of an apparatus for analyzing reflection signals according to an embodiment of the invention;
- Fig. 5: shows a schematic block diagram of a driver assistance system according to an embodiment of the invention; and
- Fig. 6: shows a vehicle comprising a driver assistance system according to an embodiment of the invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

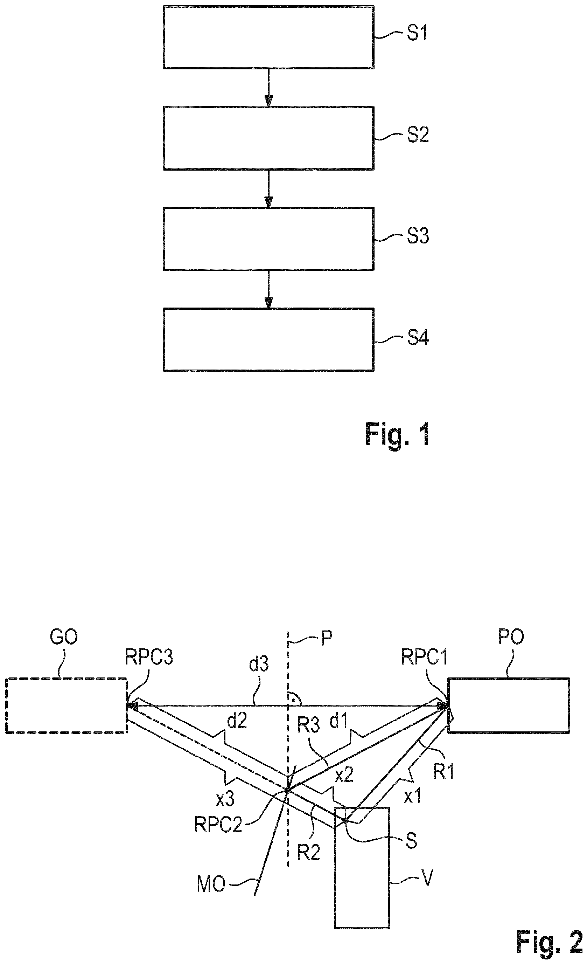

In Figure 1, a flowchart is shown which illustrates a method for analyzing reflection signals.

The method is in the following explained with reference to Figure 2, which is a top view onto an illustrative road scenario.

In a first step S1, a sensor S of a vehicle V, such as a radar sensor or an infrared sensor emits signals in the form of electromagnetic waves and receives reflection signals. The signals can be emitted and received in predetermined time intervals or in a continuous way. In this way, the reflection signals are time-dependent.

In the scenario illustrated in Figure 2, part of the electromagnetic waves follow a straight and direct first signal path R1 to a first reflection point candidate RPC1 which is a point of a further vehicle within the surrounding of the vehicle V which represents a physical object PO. The signal is reflected back to the sensor S along the same first path R1 and is received as a first reflection signal.

Part of the electromagnetic waves also follow a straight and direct second signal path R2 to a second reflection point candidate RPC2 which is a point of a guardrail which represents a mirror object MO. The signal is reflected back to the sensor S along the same second path R2 and is received as a second reflection signal.

The electromagnetic waves further follows along a third signal path R3 which comprises the second signal path R2 up to the second reflection point candidate RPC2. However, in this case, the electromagnetic wave is not reflected back to the sensor but reflected towards the first reflection point candidate RPC1. The electromagnetic wave is reflected back from the first reflection point along the third signal path R3 to the sensor S and is received as a third reflection signal.

The sensor measures incoming directions and a respective time-of-flight of the first to third reflection signals.

Based on incoming directions and on a distance measurement based on a time-of-flight analysis, first to third reflection point candidates RPC1 to RPC3 are identified. The first and second reflection point candidates RPC1 and RPC2 correspond to the actual reflection points, whereas the third reflection point candidate RPC3 corresponds to a point of an unphysical ghost object GO which is a non-existing mirror image of the physical object PO. The third reflection point candidate RPC3 is identified as the point where the signal is believed to be reflected, since the influence of the mirror object MO is not yet known to the sensor.

In a second step S2, time-dependent vectorial distances are determined based on incoming directions and time-of-flight information of the reflection signals. The distances may have the form of two-dimensional or three-dimensional vectors. A first sensor distance ×1 between the first reflection point candidate RPC1 and the sensor S, a second sensor distance x2 between the second reflection point candidate RPC2 and the sensor S, and a third sensor distance x3 between the third reflection point candidate RPC3 and the sensor S are determined based on a time-of-flight analysis of the first to third reflection signals, respectively. Based on the first to third sensor distances ×1 to x3, by a geometric analysis a first distance d1 between the first reflection point candidate RPC1 and the second reflection point candidate RPC2, a second distance d2 between the third reflection point candidate RPC3 and the second reflection point candidate RPC2, and a third distance d3 between the first reflection point candidate RPC1 and the third reflection point candidate RPC3 are determined. The exact location of the reflection point candidates RPC1 to RPC3 and therefore also the distances are time-dependent.

In a third method step S3, a distance condition and a mirror condition are checked. The distance condition holds if the time dependence of the absolute value of the first distance d1 is equal to the time dependence of the absolute value of the second distance d2. The mirror condition holds if the time dependence of the first distance d1 is mirror symmetric to the time dependence second distance d2 relative to a time-dependent plane P which is orthogonal to the third distance d3 and extends through the second reflection point candidate RPC2. Thus, the plane P is constructed based on the determined third distance and the second reflection point candidate and the time dependence of the vectorial first distance d1 and second distance d2 are checked for mirror symmetry. In particular, a velocity and/or an acceleration of the first and third reflection point candidates RPC1, RPC3 relative to the time dependent plane P are observed and checked for mirror symmetry.

In a further method step S4, if both the distance condition and the mirror condition hold, the reflection signal out of the first and third reflection signal corresponding to the reflection point candidate RPC 1, RPC3 having a larger sensor distance x1, x3 is classified as a false signal. In the scenario illustrated in Figure 2, the third sensor distance x3 corresponding to the third reflection point candidate RPC3 is identified to be larger than the first sensor distance x1 corresponding to the first reflection point candidate RPC1. Thus, the third reflection signal corresponding to the third reflection point candidate RPC3 is identified as a false signal.

The third reflection point candidate RPC3 may only be classified as a false signal if in addition the condition holds that the third reflection point candidate RPC3, the second reflection point candidate RPC2 and the sensor S lie on the same line, i.e. the third distance d2 and the third sensor distance x3 have the same vectorial direction, although with different absolute values.

Further, the second reflection point candidate RPC2 may be classified as a mirror point corresponding to a mirroring surface or mirror object. Guardrails, road signs or further vehicles may be identified or classified based on reflection point candidates classified as mirror points.

The first reflection signal corresponding to the first reflection point candidate RPC1 may be identified as a valid signal corresponding to a real physical reflection point. Physical objects in the neighbouring of the vehicle V, such as further vehicles, guardrails, buildings or road signs may be identified and classified based on valid signals.

According to a further embodiment, all possible combinations of first to third reflection signals out of the received reflection signals are used in order to classify false signals. Preferably, if a reflection signal is classified as a false signal, it is not used for further analyzing steps.

Preferably, all reflection signals which have not been classified as false signals are analyzed further in order to determine the distances or properties of objects.

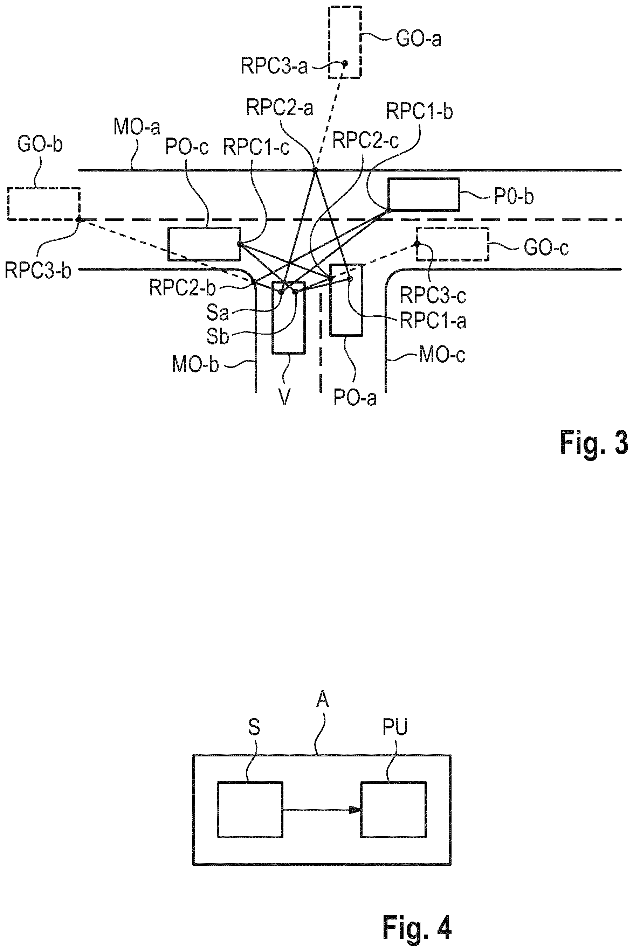

In Figure 3 illustrates a top view on a further road scenario. A vehicle V comprises a first sensor Sa and a second sensor Sb, such as radar sensors or an infrared sensors which emit and receive reflection signals.

Sensor paths for two respective measurements for the first sensor Sa and one measurement for the second sensor Sb are illustrated. Based on these measurements, three sets of respective first to third reflection point candidates RPC1-a to RPC3-a, RPC1-b to RPC3-b, and RPC1-c to RPC3-c are determined, corresponding to respective physical objects PO-a, PO-b, PO-c, to ghost objects GO-a, GO-b, GO-c, and to mirror objects MO-a, MO-b, MO-c. False signals are determined and the signals and/or objects are classified based on the method steps as outlined above.

Figure 4 shows a block diagram of an apparatus A for analyzing reflection signals. The apparatus A comprises a sensor S which is adapted to emit and to receive time-dependent reflection signals, wherein each reflection signal corresponds to a respective reflection point candidate. The sensor S may comprise a radar sensor or an infrared sensor.

The apparatus A further comprises a processing unit PU which may comprise at least one microprocessor.

The processing unit PU is adapted to identify the respective reflection point candidate based on an incoming direction of the received time dependent reflection signal and on a distance determination, for instance based on a time-of-flight analysis. The processing unit PU is further adapted to determine time-dependent vectorial distances for first to third reflection signals corresponding to respective first to third reflection point candidates RPC1 to RPC3. The distances comprise a first distance d1 between the first and second reflection point candidates RPC1, RPC2, a second distance d2 between the second and third reflection point candidates RPC2, RPC3, a third distance d3 between the first and third reflection point candidates RPC1, RPC3, and first to third sensor distances x1 to x3 between the sensor and the first to third reflection point candidates RPC1 to RPC3, respectively.

The processing unit PU is further adapted to check if a distance condition and a mirror condition hold. The distance condition holds if the time dependence of the absolute value of the first distance d1 is equal to the time dependence of the absolute value of the second distance d2.

The processing unit PU further determines a time-dependent plane P which is orthogonal to the third distance d3 and extends through the second reflection point candidate RPC2. The mirror condition holds if the time dependence of the first distance d1 and the time dependence of the second distance d2 are mirror symmetric relative to the plane P. If the processing unit PU verifies that the distance condition and the mirror condition hold, the processing unit PU is adapted to classify the reflection signal out of the first reflection signal and the third reflection signal RPC1, RPC3, corresponding to the reflection point candidate RPC3 having a larger sensor distance x3 as a false signal. The processing unit PU may also be adapted to perform any further method steps as outlined above.

The processing unit PU may also be adapted to generate a map of reflection points based on the reflection point candidates, wherein reflection point candidates corresponding to false signals are excluded. The processing unit may generate an image based on the map of reflection points.

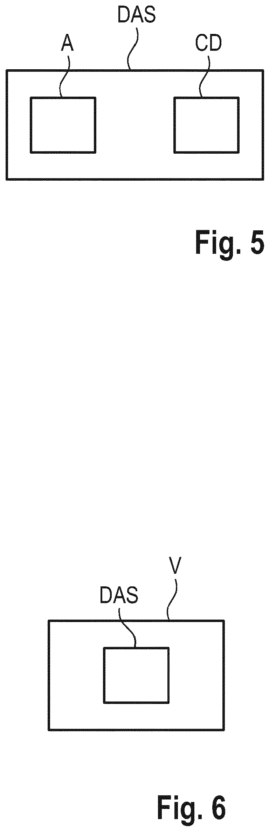

Figure 5 shows a block diagram of a driver assistance system DAS according to an embodiment of the invention. The driver assistance system DAS comprises an apparatus A according to one of the above embodiments. The driver assistance system further comprises a control device CD, which is coupled to the apparatus A and receives the reflection signals together with information about the false reflection signals from the apparatus A. The control device D may also only receive those reflection signals which have not been classified as false signals. The control device is adapted to control driving functions of the vehicle V based on the reflection signals by taking into account the reflection signals being identified as false signals by the processing unit PU of the apparatus A. For instance, the control device CD may simply neglect all false signals and may perform driving functions only based on reflection signals not identified as false signals. For instance, the control device CD may accelerate or decelerate the vehicle based on the reflection signals.

In Figure 6, a vehicle V comprising a driver assistance system DAS is shown, wherein the driver assistance system DAS may be one of the above described embodiments.

### LIST OF REFERENCE SIGNS

- A: apparatus
- d1: first distance
- d2: third distance
- d3: second distance
- CD: control device
- DAS: driver assistance system
- GO: ghost object
- GO-a to GO-c: ghost objects
- M: mirror object
- MO-a to MO-c: mirror objects
- P: plane
- PU: processing unit
- PO: physical object
- PO-a to PO-c: physical objects
- R1, R2: signal paths
- RPC1: first reflection point candidate
- RPC1-a to RPC1-c: first reflection point candidates
- RPC2: second reflection point candidate
- RPC2-a to RPC2-c: second reflection point candidates
- RPC3: third reflection point candidate
- RPC3-a to RPC3-c: third reflection point candidates
- S: sensor
- Sa: first sensor
- Sb: second sensor
- x1: first sensor distance
- x2: second sensor distance
- x3: third sensor distance
- V: vehicle

## Claims

1. A method for analyzing reflection signals, comprising the following steps:
receiving (S1) time-dependent reflection signals by a sensor (S), wherein each reflection signal corresponds to a respective reflection point candidate (RPC1, RPC2, RPC3) ;
determining (S2) by a processing unit (PU) , for first to third reflection signals corresponding to respective first to third reflection point candidates (RPC1, RPC2, RPC3), time-dependent vectorial distances (d1, d2, d3, x1, x2), wherein a first distance (d1) extends between the first and second reflection point candidates (RPC1, RPC2), a second distance (d2) extends between the second and third reflection point candidates (RPC2, RPC3), a third distance (d3) extends between the first and third reflection point candidates (RPC1, RPC3), and respective sensor distances (x1, x3) extend between the first or third reflection point candidate (RPC1, RPC3) and the sensor (S);
checking (S3) by the processing unit (PU) if the following conditions hold:
a) the time dependencies of the absolute value of the first distance (d1) and the absolute value of the second distance (d2) are equal, and
b) velocities and/or accelerations of the first and third reflection point candidates (RPC1, RPC3) are mirror symmetric relative to a time-dependent plane (P) which is orthogonal to the third distance (d3) and extends through the second reflection point candidate (RPC2); and
if conditions a) and b) hold, classifying (S4) the reflection signal out of the first reflection signal and the third reflection signal corresponding to the reflection point candidate (RPC3) having a larger sensor distance (x3) as a false signal.

2. The method according to claim 1, wherein the reflection signals are received by a radar sensor or an infrared sensor.

3. The method according to any of the preceding claims,
wherein reflection signals classified as false signals are excluded from further processing.

4. The method according to any of the preceding claims,
wherein the time-dependent vectorial distances (d1, d2, d3, x1, x2) are determined for all pairs of reflection point candidates (RPC1, RPC2, RPC3) and between all reflection point candidates (RPC1, RPC2, RPC3) and the sensor (S).

5. The method according to any of the preceding claims, wherein, if conditions a) and b) hold, the second reflection point candidate (RPC2) is classified as a mirror point.

6. The method according to claim 5, wherein determining the time-dependent vectorial distances (d1, d2, d3, x1, x2), checking conditions a) and b), and classifying the false signal is repeated for a different first and/or third reflection signal, wherein the reflection signal corresponding to the mirror point remains the second reflection signal.

7. The method according to any of the preceding claims,
wherein determining the time-dependent vectorial distances (d1, d2, d3, x1, x2), checking conditions a) and b), and classifying the false signal is repeated for different first and/or second and/or third reflection signals out of the set of reflection signals with those reflection signals already identified as false signals being removed.

8. The method according to any of the preceding claims, wherein determining the time-dependent vectorial distances (d1, d2, d3, x1, x2), checking conditions a) and b), and classifying the false signal is repeated for all possible combinations of first to third reflection signals out of the received reflection signals.

9. The method according to any of the preceding claims, wherein, if conditions a) and b) hold, the reflection signal out of the first reflection signal and the third reflection signal corresponding to the reflection point candidate (RPC1) having a smaller sensor distance (x1) is classified as a valid signal corresponding to a real reflection point.

10. An apparatus (A) for analyzing reflection signals, comprising
a sensor (S) adapted to receive time-dependent reflection signals, wherein each reflection signal corresponds to a respective reflection point candidate (RPC1, RPC2, RPC3); and
a processing unit (PU) which is adapted to determine, for first to third reflection signals corresponding to respective first to third reflection point candidates (RPC1, RPC2, RPC3), time-dependent vectorial distances (d1, d2, d3, x1, x2), wherein a first distance (d1) extends between the first and second reflection point candidates (RPC1, RPC2), a second distance (d2) extends between the second and third reflection point candidates (RPC2, RPC3), a third distance (d3) extends between the first and third reflection point candidates (RPC1, RPC3), and respective sensor distances (x1, x3) extend between the first or third reflection point candidate (RPC1, RPC3) and the sensor (S);
wherein the processing unit (PU) is further adapted to check if the following conditions hold:
a) the time dependencies of the absolute value of the first distance (d1) and the absolute value of the second distance (d2) are equal, and
b) velocities and/or accelerations of the first and third reflection point candidates (RPC1, RPC3) are mirror symmetric relative to a time-dependent plane (P) which is orthogonal to the third distance (d3) and extends through the second reflection point candidate (RPC2); and
wherein the processing unit (PU) is adapted to classify the reflection signal out of the first reflection signal and the third reflection signal corresponding to the reflection point candidate (RPC3) having a larger sensor distance (x3) as a false signal, if conditions a) and b) hold.

11. The apparatus (A) according to claim 10, wherein the sensor (S) comprises a radar sensor or an infrared sensor.

12. The apparatus (A) according to any of claims 10 or 11, wherein the processing unit (PU) is adapted to generate a map of reflection points based on the reflection point candidates (RPC1, RPC2, RPC3), wherein reflection point candidates (RPC3) corresponding to false signals are excluded.

13. The apparatus (A) according to claim 12, wherein the processing unit (PU) is adapted to generate an image based on the map of reflection points.

14. A driver assistance system (DAS) for a vehicle (V), comprising
an apparatus (A) for analyzing reflection signals according to any of claims 10 to 13; and
a control device (CD) which is adapted to control driving functions of the vehicle (V) based on the reflection signals.

15. A vehicle (V) comprising a driver assistance system (DAS) according to claim 14.

## Patentansprüche

1. Verfahren zum Analysieren von Reflexionssignalen, das die folgenden Schritte aufweist:
Empfangen (S1) von zeitabhängigen Reflexionssignalen durch einen Sensor (S), wobei jedes Reflexionssignal einem jeweiligen Reflexionspunktkandidaten (RPC1, RPC2, RPC3) entspricht;
Bestimmen (S2) von zeitabhängigen vektoriellen Distanzen (d1, d2, d3, x1, x2) durch eine Verarbeitungseinheit (PU) für ein erstes bis drittes Reflexionssignal, die einem jeweiligen ersten bis dritten Reflexionspunktkandidaten (RPC1, RPC2, RPC3) entsprechen, wobei sich eine erste Distanz (d1) zwischen dem ersten und zweiten Reflexionspunktkandidaten (RPC1, RPC2) erstreckt, sich eine zweite Distanz (d2) zwischen dem zweiten und dritten Reflexionspunktkandidaten (RPC2, RPC3) erstreckt und sich eine dritte Distanz (d3) zwischen dem ersten und dritten Reflexionspunktkandidaten (RPC1, RPC3) erstreckt und sich jeweilige Sensordistanzen (x1, x3) zwischen dem ersten oder dritten Reflexionspunktkandidaten (RPC1, RPC3) und dem Sensor (S) erstrecken;
Prüfen (S3) durch die Verarbeitungseinheit (PU), ob die folgenden Bedingungen erfüllt sind:
a) die Zeitabhängigkeiten des Absolutwerts der ersten Distanz (d1) und des Absolutwerts der zweiten Distanz (d2) sind gleich und
b) Geschwindigkeiten und/oder Beschleunigungen des ersten und dritten Reflexionspunktkandidaten (RPC1, RPC3) sind relativ zu einer zeitabhängigen Ebene (P), die zu der dritten Distanz (d3) orthogonal ist und sich durch den zweiten Reflexionspunktkandidaten (RPC2) erstreckt, spiegelsymmetrisch; und
wenn die Bedingungen a) und b) erfüllt sind, Klassifizieren (S4) des Reflexionssignals aus dem ersten Reflexionssignal und dem dritten Reflexionssignal, das dem Reflexionspunktkandidaten (RPC3) mit einer größeren Sensordistanz (x3) entspricht, als ein Falschsignal.

2. Verfahren nach Anspruch 1, wobei die Reflexionssignale durch einen Radarsensor oder einen Infrarotsensor empfangen werden.

3. Verfahren nach einem der vorhergehenden Ansprüche, wobei als Falschsignale klassifizierte Reflexionssignale aus weiterer Verarbeitung ausgeschlossen werden.

4. Verfahren nach einem der vorhergehenden Ansprüche, wobei die zeitabhängigen vektoriellen Distanzen (d1, d2, d3, x1, x2) für alle Paare von Reflexionspunktkandidaten (RPC1, RPC2, RPC3) und zwischen allen Reflexionspunktkandidaten (RPC1, RPC2, RPC3) und dem Sensor (S) bestimmt werden.

5. Verfahren nach einem der vorhergehenden Ansprüche, wobei, wenn die Bedingungen a) und b) erfüllt sind, der zweite Reflexionspunktkandidat (RPC2) als ein Spiegelpunkt klassifiziert wird.

6. Verfahren nach Anspruch 5, wobei das Bestimmen der zeitabhängigen vektoriellen Distanzen (d1, d2, d3, x1, x2), das Prüfen der Bedingungen a) und b) und das Klassifizieren des Falschsignals für ein anderes erstes und/oder drittes Reflexionssignal wiederholt werden, wobei das dem Spiegelpunkt entsprechende Reflexionssignal das zweite Reflexionssignal bleibt.

7. Verfahren nach einem der vorhergehenden Ansprüche, wobei das Bestimmen der zeitabhängigen vektoriellen Distanzen (d1, d2, d3, x1, x2), das Prüfen der Bedingungen a) und b) und das Klassifizieren des Falschsignals für ein anderes erstes und/oder zweites und/oder drittes Reflexionssignal aus der Menge von Reflexionssignalen wiederholt werden, wobei die bereits als Falschsignale identifizierten Reflexionssignale entfernt werden.

8. Verfahren nach einem der vorhergehenden Ansprüche, wobei das Bestimmen der zeitabhängigen vektoriellen Distanzen (d1, d2, d3, x1, x2), das Prüfen der Bedingungen a) und b) und das Klassifizieren des Falschsignals für alle möglichen Kombinationen von ersten bis dritten Reflexionssignalen aus den empfangenen Reflexionssignalen wiederholt werden.

9. Verfahren nach einem der vorhergehenden Ansprüche, wobei, wenn die Bedingungen a) und b) erfüllt sind, das Reflexionssignal aus dem ersten Reflexionssignal und dem dritten Reflexionssignal, das dem Reflexionspunktkandidaten (RPC1) mit einer kleineren Sensordistanz (x1) entspricht, als ein einem realen Reflexionspunkt entsprechendes gültiges Signal klassifiziert wird.

10. Vorrichtung (A) zum Analysieren von Reflexionssignalen, aufweisend:
einen Sensor (S), ausgelegt zum Empfangen von zeitabhängigen Reflexionssignalen, wobei jedes Reflexionssignal einem jeweiligen Reflexionspunktkandidaten (RPC1, RPC2, RPC3) entspricht; und
eine Verarbeitungseinheit (PU), ausgelegt zum Bestimmen von zeitabhängigen vektoriellen Distanzen (d1, d2, d3, x1, x2) für ein erstes bis drittes Reflexionssignal, die einem jeweiligen ersten bis dritten Reflexionspunktkandidaten (RPC1, RPC2, RPC3) entsprechen, wobei sich eine erste Distanz (d1) zwischen dem ersten und zweiten Reflexionspunktkandidaten (RPC1, RPC2) erstreckt, sich eine zweite Distanz (d2) zwischen dem zweiten und dritten Reflexionspunktkandidaten (RPC2, RPC3) erstreckt und sich eine dritte Distanz (d3) zwischen dem ersten und dritten Reflexionspunktkandidaten (RPC1, RPC3) erstreckt und sich jeweilige Sensordistanzen (x1, x3) zwischen dem ersten oder dritten Reflexionspunktkandidaten (RPC1, RPC3) und dem Sensor (S) erstrecken;
wobei die Verarbeitungseinheit (PU) ferner ausgelegt ist zum Prüfen, ob die folgenden Bedingungen erfüllt sind:
a) die Zeitabhängigkeiten des Absolutwerts der ersten Distanz (d1) und des Absolutwerts der zweiten Distanz (d2) sind gleich und
b) Geschwindigkeiten und/oder Beschleunigungen des ersten und dritten Reflexionspunktkandidaten (RPC1, RPC3) sind relativ zu einer zeitabhängigen Ebene (P), die zu der dritten Distanz (d3) orthogonal ist und sich durch den zweiten Reflexionspunktkandidaten (RPC2) erstreckt, spiegelsymmetrisch; und
wobei die Verarbeitungseinheit (PU) ferner ausgelegt ist zum Klassifizieren des Reflexionssignals aus dem ersten Reflexionssignal und dem dritten Reflexionssignal, das dem Reflexionspunktkandidaten (RPC3) mit einer größeren Sensordistanz (x3) entspricht, als ein Falschsignal, wenn die Bedingungen a) und b) erfüllt sind.

11. Vorrichtung (A) nach Anspruch 10, wobei der Sensor (S) einen Radarsensor oder einen Infrarotsensor aufweist.

12. Vorrichtung(A) nach einem der Ansprüche 10 oder 11, wobei die Verarbeitungseinheit (PU) ausgelegt ist zum Erzeugen einer Karte von Reflexionspunkten auf der Basis der Reflexionspunktkandidaten (RPC1, RPC2, RPC3), wobei Falschsignalen entsprechende Reflexionspunktkandidaten (RPC3) ausgeschlossen werden.

13. Vorrichtung (A) nach Anspruch 12, wobei die Verarbeitungseinheit (PU) ausgelegt ist zum Erzeugen eines Bildes auf der Basis der Karte von Reflexionspunkten.

14. Fahrerassistenzsystem (DAS) für ein Fahrzeug (V), aufweisend:
eine Vorrichtung (A) zum Analysieren von Reflexionssignalen nach einem der Ansprüche 10 bis 13; und
eine Steuervorrichtung (CD), ausgelegt zum Steuern von Fahrfunktionen des Fahrzeugs (V) auf der Basis der Reflexionssignale.

15. Fahrzeug (V), das ein Fahrerassistenzsystem (DAS) nach Anspruch 14 aufweist.

## Revendications

1. Procédé d'analyse de signaux de réflexion, comprenant les étapes suivantes :
réception (S1) de signaux de réflexion dépendant du temps par un capteur (S), chaque signal de réflexion correspondant à un point de réflexion candidat respectif (RPC1, RPC2, RPC3) ;
détermination (S2), par une unité de traitement (PU), pour des premier à troisième signaux de réflexion correspondant à des premier à troisième points de réflexion candidats (RPC1, RPC2, RPC3), de distances vectorielles dépendant du temps (d1, d2, d3, x1, x2), une première distance (d1) s'étendant entre les premier et deuxième points de réflexion candidats (RPC1, RPC2), une deuxième distance (d2) s'étendant entre les deuxième et troisième points de réflexion candidats (RPC2, RPC3), une troisième distance (d3) s'étendant entre les premier et troisième points de réflexion candidats (RPC1, RPC3) et des distances au capteur respectives (x1, x3) s'étendant entre le premier ou le troisième point de réflexion candidat (RPC1, RPC3) et le capteur (S) ;
vérification (S3), par l'unité de traitement (PU), si les conditions suivantes sont remplies :
a) les dépendances au temps de la valeur absolue de la première distance (d1) et de la valeur absolue de la deuxième distance (d2) sont égales, et
b) les vitesses et/ou accélérations des premier et troisième points de réflexion candidats (RPC1, RPC3) présentent une symétrie miroir par rapport à un plan dépendant du temps (P) qui est orthogonal à la troisième distance (d3) et passe par le deuxième point de réflexion candidat (RPC2) ; et
si les conditions a) et b) sont remplies, classification (S4), comme faux signal, du signal de réflexion parmi le premier signal de réflexion et le troisième signal de réflexion correspondant au point de réflexion candidat (RPC3) dont la distance au capteur (x3) est la plus grande.

2. Procédé selon la revendication 1, dans lequel les signaux de réflexion sont reçus par un capteur radar ou un capteur infrarouge.

3. Procédé selon l'une quelconque des revendications précédentes, dans lequel des signaux de réflexion classifiés comme faux signaux sont exclus d'un traitement ultérieur.

4. Procédé selon l'une quelconque des revendications précédentes, dans lequel les distances vectorielles dépendant du temps (d1, d2, d3, x1, x2) sont déterminées pour toutes les paires de points de réflexion candidats (RPC1, RPC2, RPC3) et entre tous les points de réflexion candidats (RPC1, RPC2, RPC3) et le capteur (S).

5. Procédé selon l'une quelconque des revendications précédentes, dans lequel, si les conditions a) et b) sont remplies, le deuxième point de réflexion candidat (RPC2) est classifié comme point miroir.

6. Procédé selon la revendication 5, dans lequel la détermination des distances vectorielles dépendant du temps (d1, d2, d3, x1, x2), la vérification des conditions a) et b), et la classification du faux signal sont répétées pour des premier et/ou troisième signaux de réflexion différents, le signal de réflexion correspondant au point miroir demeurant le deuxième signal de réflexion.

7. Procédé selon l'une quelconque des revendications précédentes, dans lequel la détermination des distances vectorielles dépendant du temps (d1, d2, d3, x1, x2), la vérification des conditions a) et b), et la classification du faux signal sont répétées pour des premier et/ou deuxième et/ou troisième signaux de réflexion différents parmi l'ensemble de signaux de réflexion, les signaux de réflexion déjà identifiés comme faux signaux étant éliminés.

8. Procédé selon l'une quelconque des revendications précédentes, dans lequel la détermination des distances vectorielles dépendant du temps (d1, d2, d3, x1, x2), la vérification des conditions a) et b), et la classification du faux signal sont répétées pour toutes les combinaisons possibles des premier au troisième signaux de réflexion parmi les signaux de réflexion reçus.

9. Procédé selon l'une quelconque des revendications précédentes, dans lequel si les conditions a) et b) sont remplies, le signal de réflexion parmi le premier signal de réflexion et le troisième signal de réflexion correspondant au point de réflexion candidat (RPC1) dont la distance au capteur (x1) est la plus petite est classifié comme signal valide correspondant à un point de réflexion réel.

10. Appareil (A) d'analyse de signaux de réflexion, comprenant
un capteur (S) adapté à recevoir des signaux de réflexion dépendant du temps, chaque signal de réflexion correspondant à un point de réflexion candidat respectif (RPC1, RPC2, RPC3) ; et
une unité de traitement (PU) adaptée à déterminer, pour des premier à troisième signaux de réflexion correspondant à des premier à troisième points de réflexion candidats (RPC1, RPC2, RPC3), des distances vectorielles dépendant du temps (d1, d2, d3, x1, x2), une première distance (d1) s'étendant entre les premier et deuxième points de réflexion candidats (RPC1, RPC2), une deuxième distance (d2) s'étendant entre les deuxième et troisième points de réflexion candidats (RPC2, RPC3), une troisième distance (d3) s'étendant entre les premier et troisième points de réflexion candidats (RPC1, RPC3) et des distances au capteur respectives (x1, x3) s'étendant entre le premier ou le troisième point de réflexion candidat (RPC1, RPC3) et le capteur (S) ;
l'unité de traitement (PU) étant adaptée en outre à vérifier si les conditions suivantes sont remplies :
a) les dépendances au temps de la valeur absolue de la première distance (d1) et de la valeur absolue de la deuxième distance (d2) sont égales, et
b) les vitesses et/ou accélérations des premier et troisième points de réflexion candidats (RPC1, RPC3) présentent une symétrie miroir par rapport à un plan dépendant du temps (P) qui est orthogonal à la troisième distance (d3) et passe par le deuxième point de réflexion candidat (RPC2) ; et
l'unité de traitement (PU) étant adaptée à classifier, comme faux signal, le signal de réflexion parmi le premier signal de réflexion et le troisième signal de réflexion correspondant au point de réflexion candidat (RPC3) dont la distance au capteur (x3) est la plus grande, si les conditions a) et b) sont remplies.

11. Appareil (A) selon la revendication 10, dans lequel le capteur (S) comprend un capteur radar ou un capteur infrarouge.

12. Appareil (A) selon l'une quelconque des revendications 10 ou 11, dans lequel l'unité de traitement (PU) est adaptée à générer une carte de points de réflexion sur la base des points de réflexion candidats (RPC1, RPC2, RPC3), les points de réflexion candidats (RPC3) correspondant à de faux signaux étant exclus.

13. Appareil (A) selon la revendication 12, dans lequel l'unité de traitement (PU) est adaptée à générer une image sur la base de la carte de points de réflexion.

14. Système d'assistance au conducteur (DAS) pour un véhicule (V), comprenant
un appareil (A) d'analyse de signaux de réflexion selon l'une quelconque des revendications 10 à 13 ; et
un dispositif de commande (CD) adapté à commander des fonctions de conduite du véhicule (V) sur la base des signaux de réflexion.

15. Véhicule (V) comprenant un système d'assistance au conducteur (DAS) selon la revendication 14.
